# EUROPEAN PATENT SPECIFICATION

(11) **EP 3 207 791 B1**
(45) Date of publication and mention of the grant of the patent: **03.04.2024**
(21) Application number: 17156553.4
(22) Date of filing: 16.02.2017
(51) Int. Cl.: A01G 20/47

(54) **BLOWER TUBE WITH LATERAL OPENINGS**
GEBLÄSEROHR MIT SEITLICHEN ÖFFNUNGEN
TUBE DE VENTILATEUR DOTÉ D'OUVERTURES LATÉRALES

(30) Priority: 16.02.2016 US 201662295849 P
(43) Date of publication of application: 23.08.2017
(73) Proprietor: Techtronic Outdoor Products Technology Limited, Hamilton HM12 (BM)
(72) Inventor: NOLIN, Eric, Anderson, South Carolina 29621 (US); PATRICK, Robert Andrew, Simpsonville, South Carolina 29681 (US)
(74) Representative: Novagraaf Group

(56) References cited:
- US-A1- 2007 256 271
- US-A1- 2013 047 371
- US-B1- 7 065 944

## Description

### FIELD OF THE INVENTION

The invention relates to leaf blowers, and more particularly to leaf blowers having a blower tube with lateral openings.

### BACKGROUND OF THE INVENTION

Leaf blowers utilize the force of air, generally discharged through a nozzle, to move and collect leaves and other items. As such, the strength or magnitude of the airflow exhausted from the nozzle generally dictates the effectiveness at which the leaf blower can collect and move the items during use. In contrast, the size of the engine or motor creating the airflow must be minimized so as to maintain the portability of the device. According to its abstract, US-A-2013/047371 describes a portable air blower includes: a first pipe having a first outlet opening communicating with a main body, the first pipe discharging wind generated in the main body through the first outlet opening; and a second pipe having a larger diameter than that of the first pipe, the second pipe being attached movably in the axial direction to the outer circumference of the first pipe and having a second outlet opening having a larger diameter than that of the first outlet opening. In the portable air blower, the second pipe is moved relative to the first pipe to dispose the second outlet opening upstream or downstream of the first outlet opening; the second pipe has an inflow window disposed upstream of the first outlet opening, the inflow window enabling air to flow from the outside into the second pipe.

### SUMMARY OF THE INVENTION

The invention concerns an adapter according to claim 1. According to the invention, an adapter is used with a leaf blower having a distal end and a blower tube with a first end. The adapter includes a body defining a passageway and an axis therethrough, a first portion of the body and a second portion of the body. The first portion is substantially circular in cross-section and defines a first outer diameter, the first portion defines an inlet configured to be removably coupled to the distal end of the leaf blower. The second portion of the body includes a plurality of arcuate portions and at least one of the arcuate portions defines a second outer diameter that is the same as the first outer diameter, and at least one of the arcuate portions defines a third outer diameter that is different than the first outer diameter, and further wherein the second portion defines an outlet configured to be removably coupled to the first end of the blower tube. At least one aperture is defined in the body and in fluid communication with the passageway. A portion of the first portion axially overlaps a portion of the second portion to produce an inner wall and an outer wall, and further define an overlapping region with an entrance to the aperture between the inner wall and outer wall such that the entrance to the aperture is substantially perpendicular to the axis.

In another construction, a leaf blower includes a blower unit having a fan and an exhaust tube in fluid communication with the fan, wherein the exhaust tube includes a distal end. The leaf blower further includes a blower tube having an inlet, and an adapter according to the invention.

Other aspects of the invention will become apparent by consideration of the detailed description and accompanying drawings.

### BRIEF DESCRIPTION OF THE DRAWINGS

FIG. 1 is a perspective view of a leaf blower.
FIGS. 2a-2d illustrate various constructions of a blower tube.
FIGS. 3a-3c illustrate a tube adapter.
FIG. 4 is a perspective view of a construction of a leaf blower according to the invention.
FIG. 5 is a section view taken along line 5-5 of FIG. 4.
FIG. 6 is a section view take along line 6-6 of FIG. 4.
FIG. 7 is a detailed perspective view of the blower unit of FIG. 4.
FIG. 8 is a detailed perspective view of the blower tube of FIG. 4.
FIG. 9 is a perspective view of the adapter of FIG. 4.
FIG. 10 is an end view of the adapter of FIG. 9.
FIG. 11 is a section view taken long line 11-11 of FIG. 10.
FIG. 12 is a section view taken along line 12-12 of FIG. 10.

### DETAILED DESCRIPTION

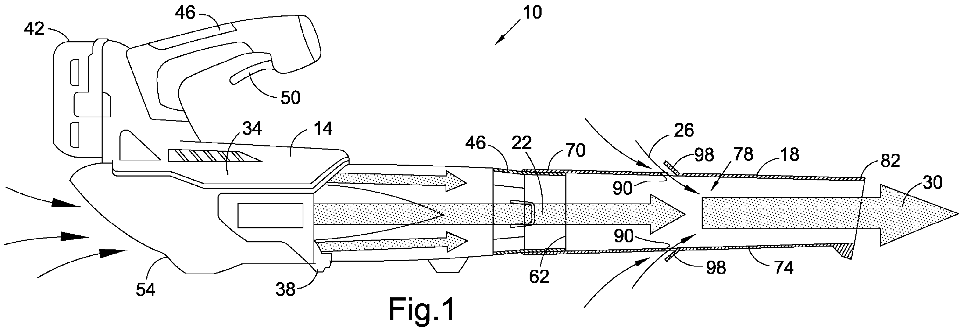

FIGS. 1-2d illustrate a leaf blower 10. The leaf blower 10 includes a blower unit 14 and a blower tube 18 coupled to the blower unit 14, which serves as a nozzle to direct an airflow produced by the blower unit 14 in a desired direction. During use, the blower tube 18 of the leaf blower 10 draws ambient air from the surrounding atmosphere into the tube 18 to supplement the airflow provided by the blower unit 14. Specifically, the blower tube 18 receives a fan or inlet airflow 22 from the blower unit 14 supplements the fan airflow 22 with a secondary airflow 26, and ultimately outputs an exhaust airflow 30 that is greater than the initial fan airflow 22. As such, the blower tube 18 is able to provide a more powerful exhaust airflow while minimizing the size and weight of the fan needed to create the airflow.

Illustrated in FIG. 1, the blower unit 14 of the leaf blower 10 includes a housing 34, a fan 38 at least partially positioned within the housing 34, and a power source or battery pack 42 to provide energy to the fan 38. In the illustrated construction, the housing 34 includes a handle 46 that the user grasps to manipulate the orientation and position of the leaf blower 10 during use. The handle 46 includes a trigger 50 or other form of user input that the user may utilize to selectively adjust the fan 38 between an "on" configuration, where an airflow is generated, and an "off" configuration, where no airflow is generated. In further constructions, additional or secondary handles may be incorporated into the blower 10. Although the fan 38 of the illustrated blower 14 is electrically powered by a battery pack 42 (e.g., DC power), in other constructions, the blower may be AC powered (e.g., plugged into a standard home electrical socket), gas powered (e.g., by a motor), and the like.

The housing 34 of the leaf blower 10 also defines an inlet channel 54 in fluid communication with both the fan 38 and the ambient atmosphere through which air is drawn into the fan 38 during operation. The inlet channel 54 may also include a filter (not shown) to restrict the flow of dust, dirt, rocks, and other potentially harmful debris into the fan 38.

The housing 34 also defines an outlet 58 in fluid communication with the fan 38 and extending from the housing 34 to form a distal end 62. During use, the outlet 58 collects and conveys the airflow from the fan 38 and directs at least a portion of that airflow into the blower tube 18 as the fan airflow 22. In the illustrated construction, the distal end 62 of the outlet 58 is substantially cylindrical in shape, being sized to be at least partially received within a first end 70 of the blower tube 18. In other constructions, the distal end 62 of the outlet 58 includes other shapes so long as the shape corresponds to the first end 70 of the blower tube 18 and forms a seal therewith. In still other constructions, the outlet 58 includes a latch (not shown) to secure the blower tube 18 to the housing 34 of the blower unit 14.

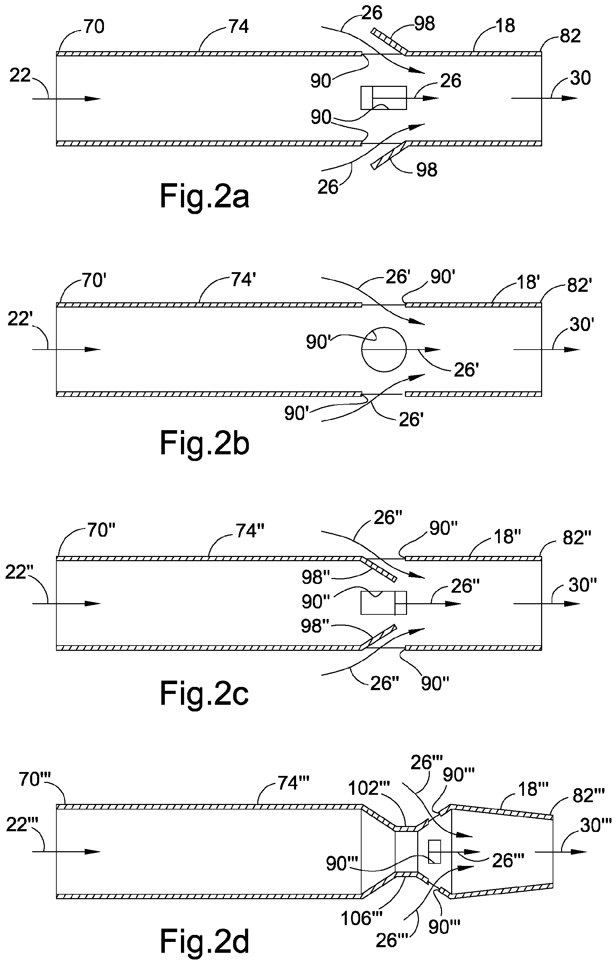

Illustrated in FIGS. 1 and 2a, the blower tube 18 of the leaf blower 10 is substantially cylindrical in shape having a substantially cylindrical outer wall 74 defining a passageway 78 therethrough. The blower tube 18 includes the first end 70 sized to be removably coupled to the distal end 62 of the outlet 58 of the blower unit 14, and a second end 82 opposite the first end 70 through which the exhaust airflow 30 is discharged. The blower tube 18 also defines apertures 90 formed in the outer wall 74 and in fluid communication with the passageway 78. During use, a secondary airflow 26 passes through the apertures 90 and into the passageway 78.

The blower tube 18 is configured to receive the fan airflow 22 from the outlet 58 of the blower unit 14. The blower tube 18 then utilizes the fan airflow 22 to draw the secondary airflow 26 through the apertures 90 and into the passageway 78. The two airflows 22, 26 then merge within the passageway 78 to produce the exhaust airflow 30. More specifically, the blower tube 18 utilizes the relatively low-pressure created within the passageway 78 by the fan airflow 22 to draw in ambient air through the apertures 90. As such, the size, shape, and contour of the apertures 90 and the outer wall 74 are optimized to manipulate the fan airflow 22 to create the conditions necessary to draw the desired amount of secondary airflow 26 through the apertures 90 and into the passageway 78.

In the illustrated construction shown in FIG. 2a, the blower tube 18 defines substantially rectangular apertures 90 in the outer wall 74 positioned proximate the second end 82. The blower tube 18 also includes deflection panels 98, each extending from a corresponding aperture 90 toward the first end 70 and outwardly from the outer wall 74. The deflection panels 98 direct ambient air into and through the apertures 90 so as to increase the amount of secondary airflow 26 created for a given amount of fan airflow 22. In the illustrated construction, the deflection panels 98 are integrally formed with the outer wall 74 of the blower tube 18; however in other constructions the deflection panels 98 may be formed separately and coupled to the outer wall 74. In still other constructions, the deflection panels 98 may be adjustable with respect to the outer wall 74 so as to selectively open and close a respective one of the apertures 90.

FIG. 2b illustrates another construction of a blower tube 18' that is substantially similar to and operates utilizing similar principles as blower tube 18. The blower tube 18' defines substantially circular apertures 90' positioned proximate the second end 82'. In still further constructions, the apertures 90' may be positioned anywhere along the axial length of the blower tube 18'.

FIG. 2c illustrates yet another construction of a blower tube 18" that is substantially similar to and operates utilizing similar principles as blower tube 18. The blower tube 18" defines substantially rectangular apertures 90" in the outer wall 74" positioned proximate the second end 82". The blower tube 18" also includes deflection panels 98", each extending from a corresponding aperture 90" toward the second end 82" and inwardly from the outer wall 74". The deflection panels 98" increase the magnitude of low-pressure created within the passageway 78" thereby drawing a greater amount of ambient air through the apertures 90" for a given amount of fan airflow 22". In the illustrated construction, the defection panels 98" are integrally formed with the outer wall 74" of the blower tube 18"; however in other constructions the deflection panels 98" may be formed separately and coupled to the outer wall 74". In still other constructions, the deflection panels 98" may be adjustable with respect to the outer wall 74" in a plurality of positions to modify the magnitude of low-pressure formed by the panels 98 " within the passageway 78".

FIG. 2d illustrates yet another construction of a blower tube 18'", which is substantially similar to and operates utilizing similar principles as blower tube 18. The outer wall 74'" of the blower tube 18'" forms a venturi 102'", by extending inwardly to form a neck portion 106'", then extending outwardly to form the second end 82'". The blower tube 18'" also defines apertures 90‴ formed in the venturi wall downstream of the neck portion 106'". During use, the shape of the venturi 102‴ and positioning of the apertures 90'" downstream of the neck 106'" produce a low-pressure zone that draws ambient air into the passageway 78‴ when the fan airflow 22‴ passes therethrough. In the illustrated construction, the venturi 102‴ is formed integrally with the outer wall 74'" of the blower tube 18‴, however in other constructions, the venturi 102'" may include a separately formed piece positioned inside the passageway 78‴.

To operate the leaf blower 10, the user couples the blower tube 18 to the blower unit 14 by joining the distal end 62 of the outlet 58 with the first end 70 of the blower tube 18. Once joined, the user grasps the handle portion 46 and orients the second end 82 of the blower tube 18 in the direction that he or she wishes to direct the exhaust airflow 30.

After positioning the blower 10, the user then activates the trigger 50, causing the fan 38 to switch from an off configuration to an on configuration. With the fan 38 in the on configuration, ambient air is drawn through the inlet 54 and into the fan 38 where it is exhausted through the outlet 58 and into the first end 70 of the blower tube 18 as the fan airflow 22. The fan airflow 22 then travels along the passageway 78 of the blower tube 18 drawing in ambient air through the apertures 90 in the form of a secondary airflow 26. The secondary airflow 26 then combines with the fan airflow 22 within the passageway 78 where the combined airflow exits the second end 82 as the exhaust airflow 30 that is greater in airflow rate than the initial fan airflow 22.

When the user is done operating the leaf blower 10, the user releases the trigger 50 thereby causing the fan to return to the off configuration, stopping the flow of air through the passageway 78.

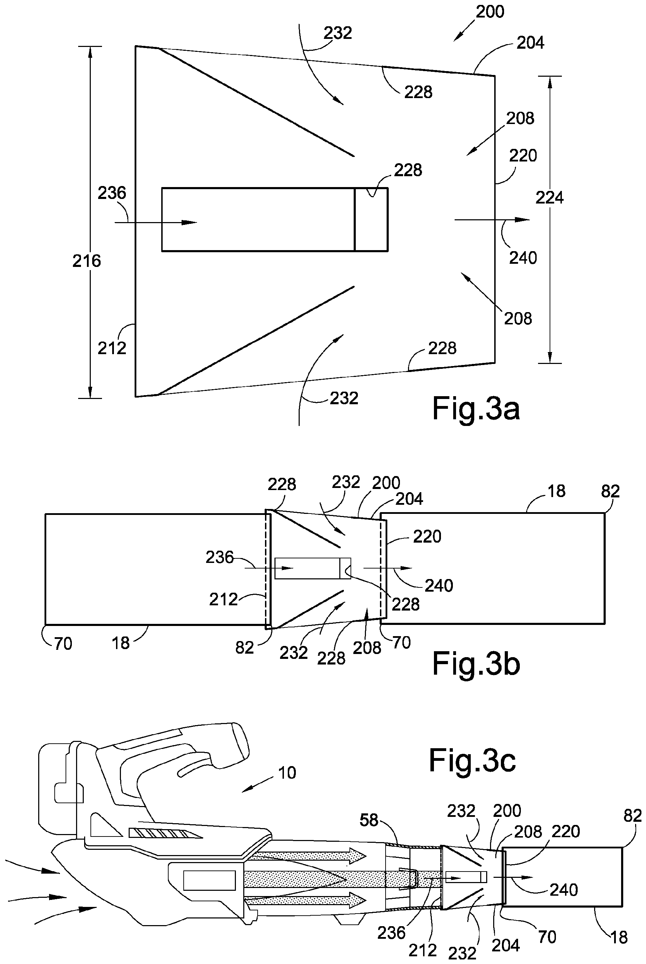

FIGS. 3a-3c illustrate a tube adapter 200 configured to be used in conjunction with the leaf blower 10 and the blower tube 18 to increase an airflow rate within the blower tube 18. The adapter 200 is substantially cylindrical in shape having a substantially annular outer wall 204 defining a passageway 208 therethrough. The adapter 200 also includes an inlet 212, having a first diameter 216, and an outlet 220 opposite the inlet 212, having a second diameter 224.During use, the adapter 200 is installed between two elements of the leaf blower 10, such as between two blower tubes 18 (FIG. 3b), or between a blower tube 18 and the outlet 58 of the leaf blower 10 (FIG. 3c). In still other constructions, the adapter tube 200 may be positioned on the second end 82 of the blower tube 18 to form an outlet nozzle (not shown).

Illustrated in FIGS. 3a-3c, the inlet 212 of the adapter 200 is sized and shaped to receive at least a portion of a "male" connecting end of a leaf blower element (e.g., the second end 82 of the blower tube 18 or the outlet 58 of the leaf blower 10). In the illustrated construction, the inlet 212 of the adapter 200 defines the first diameter 216 that is substantially similar to the diameter of the first end 70 of the blower tube 18 and is larger than the outer diameter of the second end 82. In contrast, the outlet 58 of the leaf blower 10 is configured to be at least partially positioned within the "female" connecting end of a leaf blower element (e.g., the first end 70 of a blower tube 18). In the illustrated construction, the outlet 220 of the adapter 200 defines the second diameter 224 that is substantially similar to the diameter of the second end 82 of the blower tube 18 and is smaller than the interior diameter of the first end 70.

Illustrated in FIGS. 3a-3c, the annular wall 204 of the adapter 200 includes apertures 228 formed in the outer wall 204 and in fluid communication with the passageway 208. During use, a secondary airflow 232 passes through the apertures 228 and into the passageway 208 in a manner similar to that described above with respect to the apertures 90 of the blower tube 18. More specifically, the adapter 200 and apertures 228 receive an input airflow 236 via the inlet 212, supplement the airflow with the secondary airflow 232 entering via the apertures 228 (as described above), and output an exhaust airflow 240 through the outlet 220 that is greater in magnitude than the initial input airflow 236. While the illustrated construction includes apertures 228 in a style similar to those illustrated in FIG. 2c, it should be appreciated that the outer wall 204 of the adapter 200 may include any form of aperture or wall orientation as descried above (e.g., 90, 90', 90", 90"'). In still other constructions, the adapter 200 may include more or fewer apertures 228 than the blower tube 18 constructions described above.

Although not illustrated, it is to be appreciated that in some constructions, the outlet 220 of the adapter 200 is modified to include a nozzle (not shown) to direct and shape the exhaust airflow 240. In such constructions, the nozzle may not necessarily be shaped to be coupled to the "female" connecting end of a leaf blower element, and instead is designed to be positioned downstream of all other elements (i.e., coupled to the second end 82 of the most downstream blower tube 18).

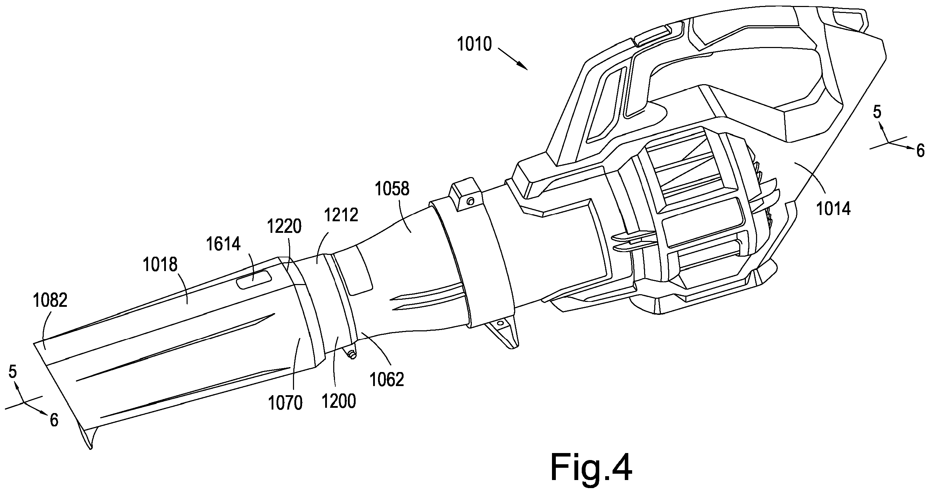

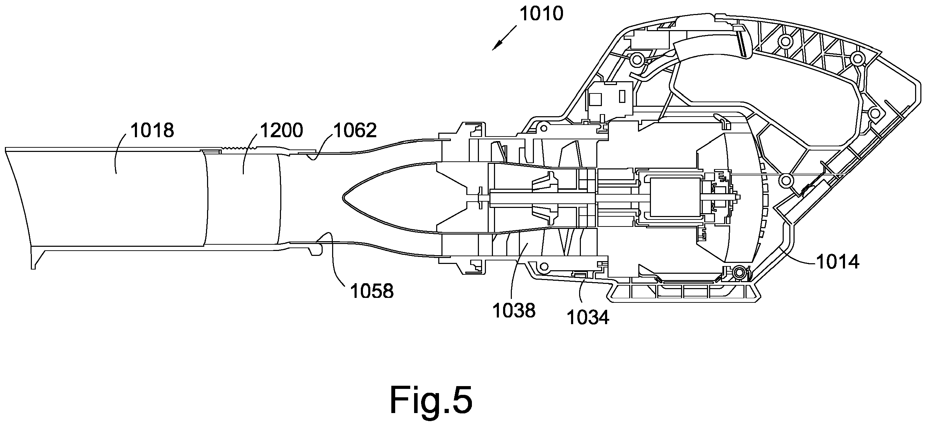

FIG. 4 illustrates a leaf blower 1010 according to a construction of the invention. The leaf blower 1010 is substantially similar to the leaf blower 10 described above; as such, only the differences between the two constructions will be described herein using like reference numerals plus "1000". Illustrated in FIGS. 4 and 5, the leaf blower 1010 includes a blower unit 1014, a blower tube 1018, and an adapter 1200 couplable to both the blower tube 1018 and the blower unit 1014 and configured to supplement the airflow of the blower unit 1014.

Referring to FIGS. 4, 5, and 7, the blower unit 1014 of the leaf blower 1010 defines an exhaust tube or outlet 1058 in fluid communication with the fan 1038 and extending from the housing 1034 to form a distal end 1062. The exhaust tube 1058 defines an axis 1500 extending therethrough. During use, the exhaust tube 1058 collects and conveys the airflow from the fan 1038 and directs the corresponding airflow (i.e., the inlet airflow 1022) axially out the distal end 1062.

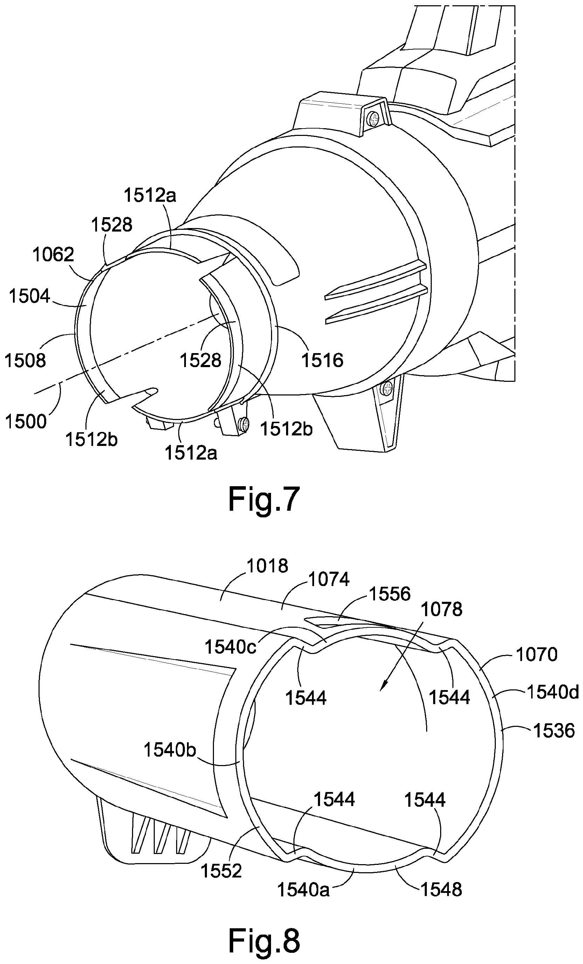

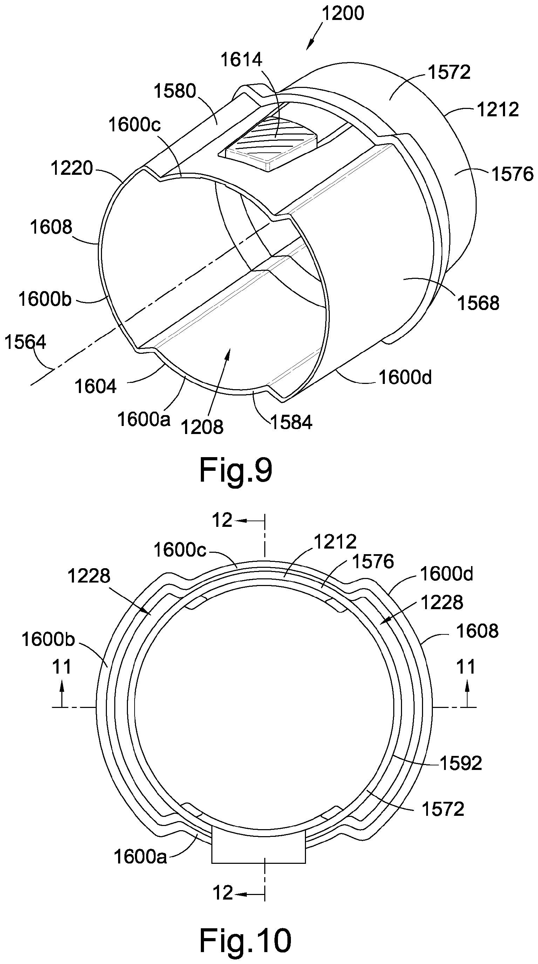

Illustrated in FIG. 7, the distal end 1062 of the exhaust tube 1058 defines a first contour 1504. The first contour 1504 is sized to be at least partially received within the inlet 1212 (FIG. 9) of the adapter 1200 (described below) and detachably couplable thereto. In the illustrated construction, the first contour 1504 is substantially circular in cross-sectional shape defining a first outer diameter 1508. The first contour 1504 includes two sets of protrusions 1512a, 1512b extending axially outwardly from a first stop ridge 1516. More specifically, the first set of protrusions 1512a extend a first axial distance from the first stop ridge 1516 while the second set of protrusions 1512b extend a second axial distance, greater than the first axial distance. The second set of protrusions 1512b also includes a locking ridge 1528 formed proximate the end thereof. During use, each locking ridge 1528 is configured to releasably engage a corresponding locking ledge 1532 (FIG. 9) of the adapter 1200 (described below).

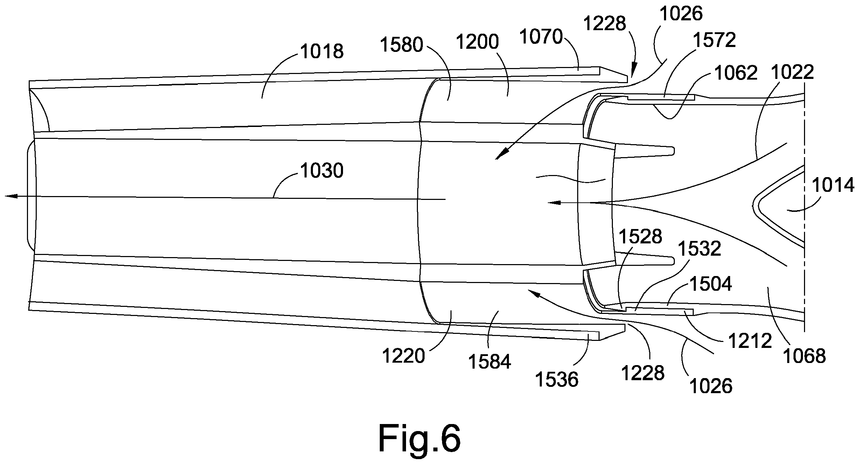

Referring to FIGS. 4-6, and 8, the blower tube 1018 of the leaf blower 1010 is substantially cylindrical in shape being formed from a substantially cylindrical outer wall 1074 and defining a passageway 1078 therethrough. The blower tube 1018 includes a first end 1070 sized to be removably coupled to an outlet 1220 of the adapter 1200 (described below), and a second end 1082 opposite the inlet 1070 through which the exhaust airflow 1030 is discharged.

The first end 1070 of the blower tube 1018 defines a second contour 1536 different from the first contour 1504 and configured to at least partially receive a portion of the outlet 1220 (FIG. 9) of the adapter 1200 (described below) therein. The second contour 1536 includes four arcuate portions 1540a, 1540b, 1540c, 1540d positioned along a circumference of the outer wall 1074 to define bow-tie-like cross-sectional shape. The second contour 1536 also includes four intermediate portions 1544 extending between and interconnecting the four arcuate portions 1540a-d. In the illustrated construction, the first and third portions 1540a, 1540c define a first outer diameter 1548 while the second and fourth portions 1540b, 1540d define a second outer diameter 1552, which is greater than the first outer diameter 1548. While the illustrated construction includes four arcuate portions generally spaced along the circumference of the outer wall 1074, other constructions may include fewer or more arcuate portions as necessary to produce the desired cross-sectional shape and size.

The blower tube 1018 also includes a locking aperture 1556 formed in the outer wall 1074 and positioned proximate the first end 1070. During use, the locking aperture 1556 is configured to at least partially receive a portion of a locking tab 1560 (FIG. 9) of the adapter 1200 therein (described below).

While the first contour 1504 of the exhaust tube 1058 is different than the second contour 1536 of the blower tube 1018 in the illustrated construction, it is to be understood that in other constructions the first and second contours 1504, 1536 may be similar. In still other constructions, the first and second contours 1504, 1536 may be the same shape but different sizes. In still other constructions, the first contour 1504 may be sized to be removably couplable to the second contour 1536 directly. In such constructions, one of the first contour 1504 and the second contour 1536 act as the "male" end of the connection while the other of the first contour 1504 and the second contour 1536 act as the "female" end of the connection.

Referring to FIGS. 4-6 and 9-12, the adapter 1200 of the leaf blower 1010 is substantially cylindrical in shape defining a passageway 1208 and an axis 1564 therethrough. The adapter 1200 includes a substantially cylindrical body 1568 having the inlet 1212 sized to be removably coupled to the distal end 1062 of the exhaust tube 1058, the outlet 1220 opposite the inlet 1212 that is sized to be removably coupled to the first end 1070 of the blower tube 1018 and apertures 1228 thorough which a secondary airflow 1026 may be introduced into the passageway 1208. During use, the adapter 1200 receives the inlet airflow 1022 from the exhaust tube 1058, supplements the inlet airflow 1022 with a secondary airflow 1026, and exhausts a larger exhaust airflow 1030 through the outlet 1220.

The body 1568 includes a first portion 1572 at least partially defining the inlet 1212 and having a third contour 1576 corresponding to the first contour 1504, and a second portion 1580 at least partially defining the outlet 1220 and having a fourth contour 1584 corresponding to the second contour 1536. The body 1568 of the adapter 1200 is formed from a single piece of material and is shaped to provide a transition between contour shapes and sizes. Further, the body 1568 includes one or more apertures 1228 in fluid communication with the passageway 1208 to draw in the secondary airflow 1026 to supplement the inlet airflow 1022 exhausted by the fan 1038. Still further, the body 1568 provides the necessary passageway shape to help maximize the amount of air dawn into the passageway 1208 while minimizing any turbulent losses.

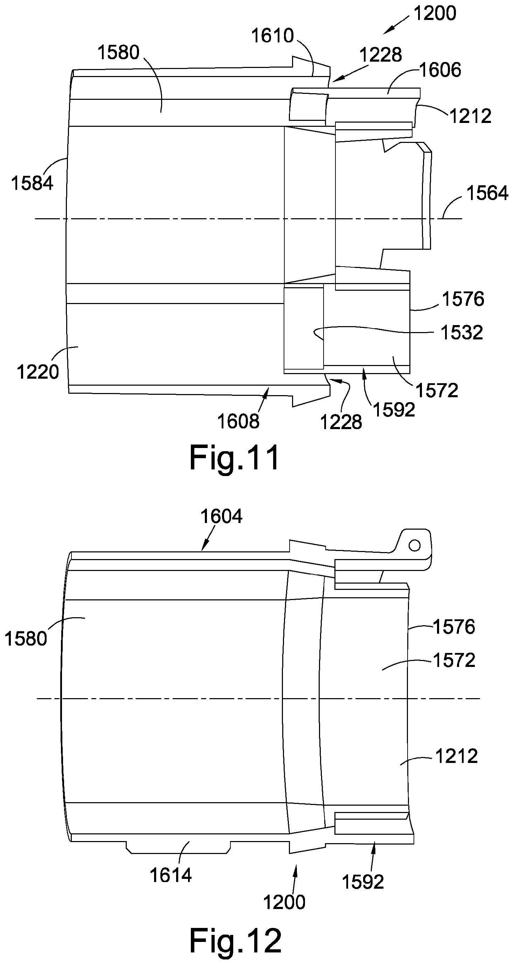

The first portion 1572 of the body 1568 is substantially cylindrical in shape extending from the inlet 1212 a first axial distance to produce the third contour 1576 and a first outer diameter 1592. In the illustrated construction, the third contour 1576 is sized to be at least partially received within the distal end 1062 of the exhaust tube 1058. The first portion 1572 also defines a pair of locking grooves 1532 (FIG. 11) configured to engage a corresponding one of the locking ridge 1528 to releasably couple the adapter 1200 to the exhaust tube 1058.

The second portion 1580 of the body 1568 includes four arcuate portions 1600a-d each extending circumferentially along the outside of the body 1568. In the illustrated construction, the first and third arcuate portions 1600a, 1600c define a second outer diameter 1604 substantially similar to the first outer diameter 1592 of the first portion 1572. The second and fourth arcuate portions 1600b, 1600d define a third outer diameter 1608 that is different than (e.g. larger) than the first outer diameter 1592 of the first portion 1572.

Together, the first portion 1572 and the second portion 1580 combine to define a pair of apertures 1228 through which the secondary airflow 1026 is introduced into the passageway 1208. More specifically, the first and third arcuate portions 1600a, 1600c of the body 1568 substantially radially align with the first portion 1572 to create two substantially continuous walls positioned diametrically opposite one another and extending axially between the inlet 1212 and the outlet 1062 (FIG. 12). Furthermore, the second and fourth arcuate portions 1600b, 1600d do not radially align with the first portion 1572 to form an arcuate shaped aperture 1228 in the gap formed therebetween (FIG. 11). More specifically, the second and fourth arcuate portions 1600b, 1600d are radially displaced from and axially aligned with the corresponding regions of the first portion 1572 producing two instances of an inner wall 1606 and an overlapping outer wall 1610 (FIG. 11). In the illustrated construction, the inner wall 1606 and outer wall 1610 are shaped such that the two walls 1606, 1610 are substantially parallel one another in the overlapping region. Still further, the walls 1606, 1610 are configured such that the entrance to the aperture 1228 is substantially perpendicular to the axis 1564 of the adapter 1200.

While the illustrated construction includes two arcuate portions 1600a, 1600c that align with the first portion 1572, and two arcuate portion 1600b, 1600d that do not radially align with the first portion 1572; it is to be understood that in other constructions, fewer or more portions of either type may be included. Furthermore, while all the arcuate portions 1600 extend approximately the same circumferential angular distance (i.e., 90 degrees) in the illustrated construction, in further constructions each arcuate portion may be smaller or larger than adjacent arcuate portions 1600 or be the same of different size than other arcuate portions 1600 of the same type.

The body 1568 of the adapter 1200 also includes a locking tab 1614 configured to releasably engage the locking aperture 1556 of the blower tube 1018. The locking tab 1614 is adjustable between an engaged configuration, where the blower tube 1018 cannot be removed from the adapter 1200, and a disengaged configuration, where the blower tube 1018 can be removed from the adapter 1200. In the illustrated construction, the locking tab 1614 includes a push button which is resiliently formed into the body 1568 of the adapter 1200 (see FIG. 9).

## Claims

1. An adapter (1200) configured to be used with a leaf blower (1010) having a distal end (1062) and a blower tube (1018) with a first end (1070), the adapter (1200) comprising :
a body (1568) defining a passageway (1208) and an axis (1564) therethrough,
a first portion (1572) of the body (1568) wherein the first portion (1572) is substantially circular in cross-section and defines a first outer diameter (1592), the first portion (1572) defines an inlet (1212) for removably coupling to the distal end (1062) of the leaf blower (1010); and
a second portion (1580) of the body (1568) wherein the second portion (1580) includes a plurality of arcuate portions (1600a-d), at least one of the arcuate portions defines a second outer diameter (1604) that is the same as the first outer diameter (1592), and at least one of the arcuate portions defines a third outer diameter (1608) that is different than the first outer diameter (1592), and further wherein the second portion (1580) defines an outlet (1220) for removably coupling to the first end (170) of the blower tube (1018) ; and
at least one aperture (1228) defined in the body (1568) and in fluid communication with the passageway (1208), and
wherein a portion of the first portion (1572) axially overlaps a portion of the second portion (1580) to produce an inner wall (1606) and an outer wall (1610), and further define an overlapping region with an entrance to the aperture (1228) between the inner wall (1606) and outer wall (1610) such that the entrance to the aperture (1228) is substantially perpendicular to the axis (1564).

2. The adapter (1200) of claim 1, wherein the inner wall (1606) and the outer wall (1610) are substantially parallel in the overlapping region.

3. The adapter (1200) of claims 1 or 2, wherein the first portion (1572) and the second portion (1580) produce a continuous arcuate wall extending axially between the inlet (1212) and the outlet (1220).

4. The adapter (1200) of claim 1, wherein the second portion (1580) includes four arcuate portions (1600a-d).

5. The adapter (1200) of claim 1 or claim 4, wherein each arcuate portion (1600) extends circumferentially approximately 90 degrees.

6. The adapter (1200) of claim 5, wherein the body (1568) is formed from a single piece of material.

7. A leaf blower (1010) comprising:
a blower unit (1014) including a fan (1038) and an exhaust tube (1058) in fluid communication with the fan (1038), wherein the exhaust tube (1058) includes a distal end (1062);
a blower tube (1018) including a first end (170); and
an adapter (1200) according to one of the claims 1 to 6.

8. The leaf blower (1010) of claim 7, wherein the inner wall is substantially parallel to the outer wall in the axially aligned region.

9. The leaf blower (1010) of claim 7 or 8, wherein the outer wall extends circumferentially approximately 90 degrees.

10. The leaf blower (1010) of any one of claims 7 to 9, wherein the outer wall is a first outer wall, and wherein the adapter (1200) includes a second outer wall radially displaced from and at least partially axially aligned with the inner wall (1606) to define at least one aperture (1228) therebetween, and wherein the first outer wall is diametrically opposite the second outer wall.

11. The leaf blower (1010) of any one of claims 7 to 10, wherein the distal end (1062) of the exhaust tube (1058) defines a first contour (1504) and the inlet (1070) of the blower tube (1018) defines a second contour (1536) different than the first contour (1504).

12. The leaf blower (1010) of claim 11, wherein at least one of the first contour (1504) and the second contour (1536) includes four arcuate portions (1540a-d), and wherein at least one arcuate portion defines a different outer diameter (1548, 1552) than the other arcuate portions.

13. The leaf blower (1010) of claim 11 or 12, wherein at least one of the first contour (1504) and the second contour (1536) includes a circular cross-sectional shape.

14. The leaf blower (1010) of any one of claims 7 to 13, or the adapter (1200) of claim 1, wherein the body (1568) further includes a locking tab (1614) for selectively engaging the blower tube (1018).

## Patentansprüche

1. Adapter (1200), der konfiguriert ist, um mit einem Laubgebläse (1010), das ein distales Ende (1062) und ein Blasrohr (1018) mit einem ersten Ende (1070) aufweist, verwendet zu werden, der Adapter (1200) umfassend:
einen Körper (1568), der einen Durchgang (1208) und eine Achse (1564) dort hindurch definiert,
einen ersten Abschnitt (1572) des Körpers (1568), wobei der erste Abschnitt (1572) in einem Querschnitt im Wesentlichen kreisförmig ist und einen ersten Außendurchmesser (1592) definiert, wobei der erste Abschnitt (1572) einen Einlass (1212) zum lösbaren Koppeln mit dem distalen Ende (1062) des Laubgebläses (1010) definiert; und
einen zweiten Abschnitt (1580) des Körpers (1568), wobei der zweite Abschnitt (1580) eine Vielzahl von bogenförmigen Abschnitten (1600a-d) einschließt, wobei mindestens einer der bogenförmigen Abschnitte einen zweiten Außendurchmesser (1604) definiert, der gleich dem ersten Außendurchmesser (1592) ist, und mindestens einer der bogenförmigen Abschnitte einen dritten Außendurchmesser (1608) definiert, der sich von dem ersten Außendurchmesser (1592) unterscheidet, und ferner wobei der zweite Abschnitt (1580) einen Auslass (1220) zum lösbaren Koppeln mit dem ersten Ende (170) des Laubgebläses (1018) definiert; und
mindestens eine Öffnung (1228), die in dem Körper (1568) definiert ist und in Fluidverbindung mit dem Durchgang (1208) steht, und
wobei ein Abschnitt des ersten Abschnitts (1572) einen Abschnitt des zweiten Abschnitts (1580) axial überlappt, um eine Innenwand (1606) und eine Außenwand (1610) herzustellen, und ferner einen überlappenden Bereich mit einem Eingang zu der Öffnung (1228) zwischen der Innenwand (1606) und der Außenwand (1610) derart definiert, dass der Eingang zu der Öffnung (1228) im Wesentlichen senkrecht zu der Achse (1564) ist.

2. Adapter (1200) nach Anspruch 1, wobei die Innenwand (1606) und die Außenwand (1610) in dem überlappenden Bereich im Wesentlichen parallel sind.

3. Adapter (1200) nach Anspruch 1 oder 2, wobei der erste Abschnitt (1572) und der zweite Abschnitt (1580) eine durchgehende bogenförmige Wand herstellen, die sich zwischen dem Einlass (1212) und dem Auslass (1220) axial erstreckt.

4. Adapter (1200) nach Anspruch 1, wobei der zweite Abschnitt (1580) vier bogenförmige Abschnitte (1600a-d) einschließt.

5. Adapter (1200) nach Anspruch 1 oder 4, wobei sich jeder bogenförmige Abschnitt (1600) in Umfangsrichtung um etwa 90 Grad erstreckt.

6. Adapter (1200) nach Anspruch 5,
wobei der Körper (1568) aus einem einzigen Materialstück gebildet ist.

7. Laubgebläse (1010), umfassend:
eine Gebläseeinheit (1014), die einen Lüfter (1038) und ein Abgasrohr (1058) in Fluidverbindung mit dem Lüfter (1038) einschließt, wobei das Abgasrohr (1058) ein distales Ende (1062) einschließt;
ein Gebläserohr (1018), das ein erstes Ende (170) einschließt; und
einen Adapter (1200) nach einem der Ansprüche 1 bis 6.

8. Laubgebläse (1010) nach Anspruch 7, wobei die Innenwand im Wesentlichen parallel zu der Außenwand in dem axial ausgerichteten Bereich ist.

9. Laubgebläse (1010) nach Anspruch 7 oder 8, wobei sich die Außenwand in Umfangsrichtung um etwa 90 Grad erstreckt.

10. Laubgebläse (1010) nach einem der Ansprüche 7 bis 9, wobei die Außenwand eine erste Außenwand ist und wobei der Adapter (1200) eine zweite Außenwand einschließt, die von der Innenwand (1606) radial versetzt und mit dieser mindestens teilweise axial ausgerichtet ist, um mindestens eine Öffnung (1228) dazwischen zu definieren, und wobei die erste Außenwand der zweiten Außenwand diametral gegenüberliegt.

11. Laubgebläse (1010) nach einem der Ansprüche 7 bis 10, wobei das distale Ende (1062) des Abgasrohrs (1058) eine erste Kontur (1504) definiert und der Einlass (1070) des Gebläserohrs (1018) eine zweite Kontur (1536) definiert, die sich von der ersten Kontur (1504) unterscheidet.

12. Laubgebläse (1010) nach Anspruch 11, wobei mindestens eine der ersten Kontur (1504) und der zweiten Kontur (1536) vier bogenförmige Abschnitte (1540a-d) einschließt, und wobei mindestens ein bogenförmiger Abschnitt einen anderen Außendurchmesser (1548, 1552) als die anderen bogenförmigen Abschnitte definiert.

13. Laubgebläse (1010) nach Anspruch 11 oder 12, wobei mindestens eine der ersten Kontur (1504) und der zweiten Kontur (1536) eine kreisförmige Querschnittsform einschließt.

14. Laubgebläse (1010) nach einem der Ansprüche 7 bis 13 oder Adapter (1200) nach Anspruch 1, wobei der Körper (1568) ferner eine Verriegelungslasche (1614) zum selektiven Eingreifen des Gebläserohrs (1018) einschließt.

## Revendications

1. Adaptateur (1200) conçu pour être utilisé avec une souffleuse à feuilles (1010) ayant une extrémité distale (1062) et un tube de souffleuse (1018) avec une première extrémité (1070), l'adaptateur (1200) comprenant :
un corps (1568) définissant une voie de passage (1208) et un axe (1564) à travers celui-ci,
une première partie (1572) du corps (1568), dans lequel la première partie (1572) est de section transversale sensiblement circulaire et définit un premier diamètre externe (1592), la première partie (1572) définit une entrée (1212) pour l'accouplement amovible à l'extrémité distale (1062) de la souffleuse à feuilles (1010) ; et
une seconde partie (1580) du corps (1568), dans lequel la seconde partie (1580) comporte une pluralité de parties arquées (1600a-d), au moins une des parties arquées définit un deuxième diamètre externe (1604) qui est identique au premier diamètre externe (1592), et au moins une des parties arquées définit un troisième diamètre externe (1608) qui est différent du premier diamètre externe (1592), et dans lequel en outre la seconde partie (1580) définit une sortie (1220) pour l'accouplement amovible à la première extrémité (170) du tube de souffleuse (1018) ; et
au moins une ouverture (1228) définie dans le corps (1568) et en communication fluidique avec la voie de passage (1208), et
dans lequel une partie de la première partie (1572) chevauche axialement une partie de la seconde partie (1580) pour produire une paroi interne (1606) et une paroi externe (1610), et définit en outre une région de chevauchement avec une entrée de l'ouverture (1228) entre la paroi interne (1606) et la paroi externe (1610) de telle sorte que l'entrée de l'ouverture (1228) est sensiblement perpendiculaire à l'axe (1564).

2. Adaptateur (1200) selon la revendication 1, dans lequel la paroi interne (1606) et la paroi externe (1610) sont sensiblement parallèles dans la région de chevauchement.

3. Adaptateur (1200) selon les revendications 1 ou 2, dans lequel la première partie (1572) et la seconde partie (1580) produisent une paroi arquée continue s'étendant axialement entre l'entrée (1212) et la sortie (1220).

4. Adaptateur (1200) selon la revendication 1, dans lequel la seconde partie (1580) comporte quatre parties arquées (1600a-d).

5. Adaptateur (1200) selon la revendication 1 ou la revendication 4, dans lequel chaque partie arquée (1600) s'étend circonférentiellement d'environ 90 degrés.

6. Adaptateur (1200) selon la revendication 5,
dans lequel le corps (1568) est formé à partir d'une seule pièce de matériau.

7. Souffleuse à feuilles (1010) comprenant :
une unité de souffleuse (1014) comportant un ventilateur (1038) et un tube d'échappement (1058) en communication fluidique avec le ventilateur (1038), dans laquelle le tube d'échappement (1058) comporte une extrémité distale (1062) ;
un tube de souffleuse (1018) comportant une première extrémité (170) ; et
un adaptateur (1200) selon l'une des revendications 1 à 6.

8. Souffleuse à feuilles (1010) selon la revendication 7, dans laquelle la paroi intérieure est sensiblement parallèle à la paroi extérieure dans la région alignée axialement.

9. Souffleuse à feuilles (1010) selon la revendication 7 ou 8, dans laquelle la paroi extérieure s'étend circonférentiellement d'environ 90 degrés.

10. Souffleuse à feuilles (1010) selon l'une quelconque des revendications 7 à 9, dans laquelle la paroi externe est une première paroi externe, et dans laquelle l'adaptateur (1200) comporte une seconde paroi externe déplacée radialement à partir de et au moins partiellement alignée axialement avec la paroi interne (1606) pour définir au moins une ouverture (1228) entre elle, et dans laquelle la première paroi externe est diamétralement opposée à la seconde paroi externe.

11. Souffleuse à feuilles (1010) selon l'une quelconque des revendications 7 à 10, dans laquelle l'extrémité distale (1062) du tube d'échappement (1058) définit un premier contour (1504) et l'entrée (1070) du tube de souffleuse (1018) définit un second contour (1536) différent du premier contour (1504).

12. Souffleuse à feuilles (1010) selon la revendication 11, dans laquelle au moins l'un du premier contour (1504) et du second contour (1536) comporte quatre parties arquées (1540a-d), et dans laquelle au moins une partie arquée définit un diamètre externe différent (1548, 1552) que les autres parties arquées.

13. Souffleuse à feuilles (1010) selon la revendication 11 ou 12, dans laquelle au moins l'un du premier contour (1504) et du second contour (1536) comporte une forme en coupe transversale circulaire.

14. Souffleuse à feuilles (1010) selon l'une quelconque des revendications 7 à 13, ou adaptateur (1200) selon la revendication 1, dans laquelle le corps (1568) comporte en outre une languette de verrouillage (1614) pour venir en prise sélectivement avec le tube de souffleuse (1018).
